# EUROPEAN PATENT SPECIFICATION

(11) **EP 2 125 395 B1**
(45) Date of publication and mention of the grant of the patent: **25.05.2011**
(21) Application number: 08705158.7
(22) Date of filing: 31.01.2008
(51) Int. Cl.: B60C 27/18

(54) **A TEXTILE MATERIAL**
TEXTILMATERIAL
MATIÈRE TEXTILE

(30) Priority: 31.01.2007 NO 20070670
(43) Date of publication of application: 02.12.2009
(73) Proprietor: Autosock AS, 0107 Oslo (NO)
(72) Inventor: BÖNIGK, Burkhard, D-86343 Königsbrunn (DE)
(74) Representative: Selmer, Lorentz
(86) International application number: PCT/NO2008/000032
(87) International publication number: WO 2008/094049

(56) References cited:
- EP-B1- 1 616 726
- WO-A-2006/069179
- US-A- 1 657 784
- US-A- 2 015 658
- US-A- 2 408 152
- US-A- 2 682 907
- US-A- 2 984 052
- US-A- 3 335 776
- US-A- 3 335 776
- US-A- 4 142 334
- US-A- 4 539 017
- US-A- 5 820 450

## Description

The present invention relates to a device with a band suitable for the road contact belt portion of the traction device for automobile wheels of the type marketed under the trademark Autosock® and disclosed e.g. in European Patent EP 1165329 B9. The invention also relates to a method for making such a traction device.

US Patent 2,682,907 which issued in 1956, discloses an early suggestion for a traction increasing device according to the preamble of claim 1. The entire central band region is covered by a coating of abrasive particles set in adhesive applied to the double layer canvas material. The device is formed to cling quite closely to the automobile wheel. Furthermore, the glue covering the entire band region will significantly reduce its flexibility, the result being that the device according to US 2,682,907 would be virtually impossible to install on the wheel without first raising it from the ground. This drawback makes the device unsuitable for emergency use when the automobile encounters a road surface covered by ice or snow.

Paradoxically, the applicant has discovered that the friction enhancing properties of a device according to US 2;682,907 may cause hazardous driving situations when the device is applied to the driven wheels of a modern day front wheel drive automobile. Particularly when driving on an icy surface, the friction of the front wheels will be so much higher than the friction of the rear wheels that the automobile will seriously oversteer when making a turn, the rear wheels loosing their lateral grip and sending the automobile into a spin. The same result may occur during breaking.

The overall purpose of the present invention is to obtain a traction device of the type in question with suitable friction properties during winter conditions while maintaining the possibility of easy installation under inclement whether conditions and without having to raise the wheel off the ground.

The invention provides a device comprising such a band which is provided at least partially with a binding agent having abrasive particles adhering thereto, wherein said particles cover only a part of the surface area of the band, said part being preferably less than 60 % of said area, and a method for making such a device defined in claim 9.

Embodiments of the invention are defined in the dependent claims.

The invention will be described more closely below with reference to the exemplifying embodiments schematically shown in the appended drawings, wherein:
Figure 1 is a front view of a part of an apparatus for making a textile material of a device according to the invention;
Figure 2 is a cross-section at a somewhat larger scale along the line II-II in Figure 1;
Figure 3 is a detail of Figure 2 at a larger scale of a second embodiment and with the opposite direction of rotation;
Figure 4 is a view similar to Figure 3 of a further embodiment;
Figure 5 is a plan view showing a section of fabric material of the device according to the invention made with an apparatus incorporating the part shown in Figure 1;
Figure 6 shows a cross-section along the line VI-VI in Figure 5;
Figure 7 shows an enlarged detail of the patch pattern where indicated by VII in Figure 5;
Figure 8 shows at a smaller scale three possible variations of the patch pattern shown in Figure 7;
Figures 9-15 show schematically various possibilities of patch patterns combined with metal buttons for the textile material of the device according to the invention;
Figure 16 shows a front view of a friction increasing device according to the invention;
Figure 17 is a lateral view of the outer side of the device shown in Figure 16; and
Figure 18 is a lateral view of the inner side of the device shown in Figure 16.

The product Autosock® marketed by the applicant is a device to be fitted to an automobile wheel in order to increase friction between the wheel and the road surface during winter conditions. The device comprises a belt made substantially from a textile material for encircling the treadof the wheel and be held in place by means of the flexible inner and outer side portions. At least the inner side portion is tightened by means of an elastic member. The belt of the regular Autosock® is made of a polymer textile material, preferably polyester or polyamide textile material. The material is often referred to as RCF, which is an acronym for Road Contact Fabric. Further details of the RCF can be found in EP 1165329 B9. The Autosock® has gained very wide acceptance for its ease of use and excellent traction and durability properties.

For special applications, however, the applicant has modified the RCF by providing a part of its surface area with a layer of abrasive particles. These particles may be applied to the RCF in various patterns, e.g. stripes or spots, and the stripes or spots may in term be subdivided into smaller patches separated by areas of regular RCF in order not to impair significantly the flexibility of the RCF important for the dynamic behaviour and ease of installation of the Autosock®.

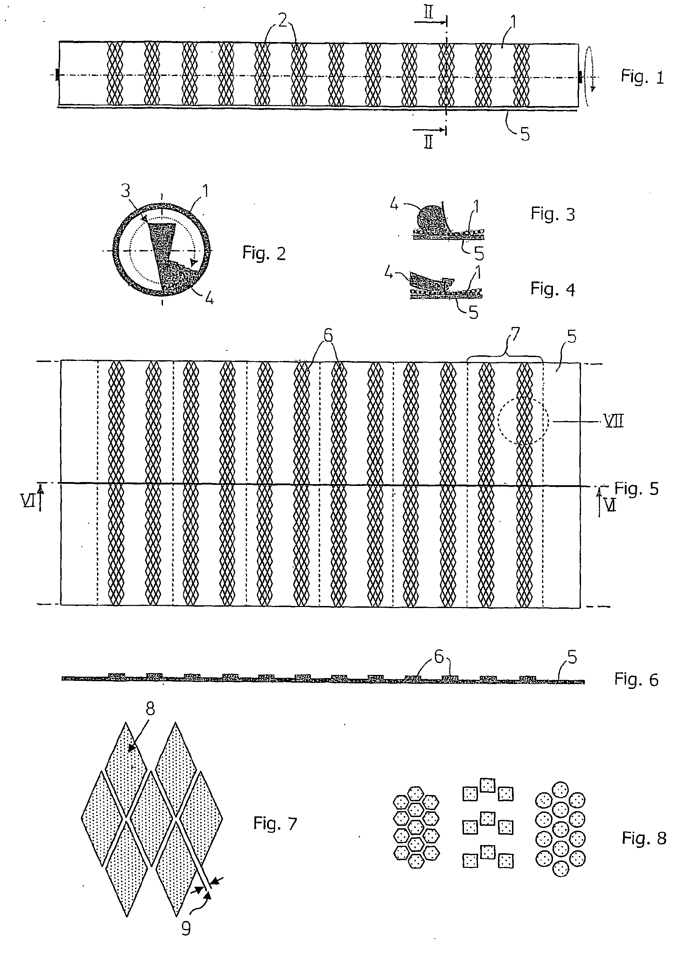

For producing such a modified RCF material on an industrial scale, the applicant suggests to use a modification of the rotary screen coating process. A drum 1 for such a process is shown in Figure 1. The drum has a series of spaced, circumferential sections 2 having a large number of closely spaced small holes arranged in groups according to the desired pattern of the patches, strips or spots of abrasive particles deposited on a substrate consisting of a web of RCF material.

Figure 2 is a cross-section showing the internals of the drum 1, where a so-called squeegee 3 forces a mixture 4 of abrasive particles mixed with a binding agent through the holes of the sections 2 of the drum 1. The thickness of the drum is exaggerated in Figure 2, and reference is made to Figures 3 and 4 which shows more clearly the perforations of the drum and alternate forms of the squeegee. It will be understood that the RCF substrate 5 passes underneath the drum 1 in synchronization therewith.

A section of the RCF substrate with stripes 6 of diamond-shaped or rhombic patches of abrasive material is shown in Figure 5. As indicated by dotted lines, the web 5 may be cut into six separate bands 7 once the binding agent of the mixture 4 has cured.

In this embodiment, each stripe 6 is subdivided into patches 8, as shown more clearly in Figure 7. Between the patches 8 there are separating portions 9 in order for the stripes 6 to be relatively flexible. Figure 8 shows alternate patterns for the patches and includes circles, squares and hexagons, but it will be understood that other forms, such as rectangles, triangles and pentagons may be chosen.

Figure 6 shows a cross-section of the substrate RCF with stripes 6 of abrasive material. It will be understood the substrate 5 with the stripes 6 are made in long continuous lengths and that the abrasive material deposited thereon may undergo various forms of treatment for curing or additional coating before the finished product is cut into the bands 7 for the production of Autosocks®.

The abrasive particles used in the mixture 4 can be made of various materials like Al2O3, SiO, CrO3, ZrO2, quartz, diamond and combinations thereof. The binding agent of the mixture 4 may e.g. be a resin or polyurethane, and the abrasive material deposited on the substrate 5 may receive a top coat of a suitable polymer system, e.g. a polyester. The size of the abrasive particles may vary between 30 µm and 800 µm, the preferred size being about 600 µm. The area of the RCF to be covered by the abrasive particles should be less than 60 %, preferably less than 50 % and for a general application should cover about 40 %.

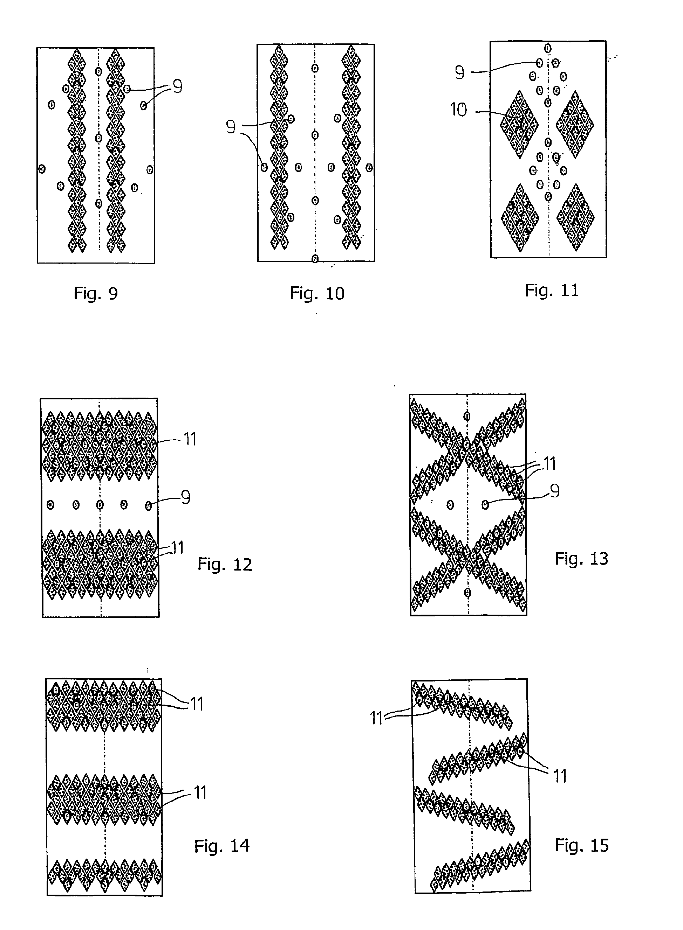

For certain road surface conditions like ice covered by sleet, the RCF with abrasive particles may benefit from metal buttons 9 and 11 shown in the exemplifying embodiments in Figures 9-15. These metal buttons may be made like the base part of regular press buttons used for garments, i.e. with one part on either side of the textile material connected together through a hole in the textile material. This connection can be a crimped connection. The holes may be melted if the RCF material is meltable, thus reinforcing the hole by means of the melted material. The buttons 9 can be placed in areas of the RCF where there is no abrasive material, as shown in Figures 9-11. The buttons 9. may be arranged in groups as shown in Figure 11, which also shows the patches 8 arranged in separate spots 10 rather than stripes.

Figures 12 and 13 show some of the buttons 9 arranged in areas where there is no abrasive material, while other buttons 11 are mixed with the areas of abrasive particles. In the embodiments of Figures 14 and 15, all the buttons 11 are within the areas of the abrasive particles. The buttons 9, 11 are preferably made of steel.

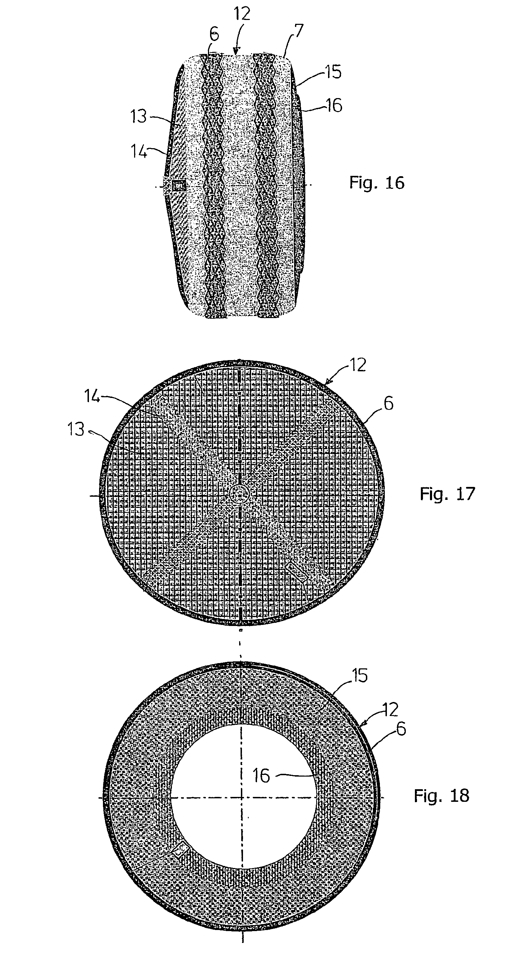

Figure 16 shows a front view of a friction increasing device according to the invention in the form it would take when mounted on a wheel. The device has a road contacting belt 12 for encircling the tread of the wheel, the belt being made of a band 7 as shown in Figure 5 having two stripes 6 of abrasive material. The device further has an outer side portion 13, as better shown in Figure 17 and two criss-crossing straps 14. The inner side portion 15 is better shown in Figure 18 and is provided with an elastic member 16.

It will be understood that the invention is not restricted to the exemplifying embodiments shown in the appended drawings and discussed above, but may be varied and modified within the scope of the appending claims. Thus, if the stripes of abrasive material do not have to be broken up in discrete patches, but may be continuous, for instance for special heavy duty service, they may be applied to the RCF through a profile knife coating process. In such applications, the surface area of the RCF band coated by the abrasive particles may be higher, e.g. up to 75 %.

If the modified rotary screen method is difficult to apply, e.g. because the desired particles should clog the openings of the drum 1, an alternate method may be to use the drum to apply only the binding agent onto the RCF 5 and then sprinkle abrasive particles onto those areas wetted by the binding agent. Any surplus particles could be vacuumed away after curing of the binding agent, and a further top coat could be applied to firmly anchor the abrasive particles. For all the methods, suction may be applied underneath the RCF in the contact area with the drum to ascertain that the binding agent penetrates sufficiently into the RCF to provide sufficient bonding to the RCF.

## Claims

1. A device to be fitted to an automobile wheel in order to increase friction between the wheel and road surface during winter conditions , comprising a road contact portion (12) made substantially from a textile material and intended to encircle the tread of the wheel and be held in place by means of flexible inner and outer side portions (13, 15) which, at least on the inner side of the wheel is tightened by means of an elastic member (16), the outside of the road contact portion (12) being provided at least partially with a binding agent having abrasive particles adhering thereto, **characterized in that** said road contact portion (12) is constituted by a separate band (7) wherein said binding agent and abrasive particles cover less than 60 % of the surface area of the band, preferably less than 50 % of said area.

2. A device according to claim 1, wherein said particles form at least one stripe (6) on said band (7).

3. A device according to claim 2, wherein said band comprises at least two stripes (6) which form a pattern chosen from the group comprising longitudinal and parallel, transverse and parallel, zigzagging, criss-crossing, or any combination of these.

4. A device according to claim 2 or 3, wherein the particles form discrete patches (8) making up said at least one or two stripes (6).

5. A device according to claim 4, wherein said patches (8) are shaped like geometrical figures chosen from the group comprising the circle, square, rectangle, triangle, rhombus, pentagon and hexagon.

6. A device according to claim 5, wherein said patches (8) are separated by areas (9) not covered by said particles.

7. A device to any one of the proceeding claims, wherein the material of the particles is chosen from the group comprising Al2O3, SiO, CrO3, ZrO2, quartz, diamond and combinations thereof.

8. A device according to any one of the proceeding claims, wherein said material is provided with a pattern of metal buttons (9, 11), said buttons preferably comprising two parts, one of either side of the textile material, connected together through a hole in the textile material.

9. A method for making a device in accordance with any one of the preceding claims, having a road contact portion (12) and inner and outer side portions (13, 15), comprising the steps of:
1) passing a web of a substrate textile material (5) in contact with a rotating drum (1) in synchronization therewith, said drum (1) having a plurality of closely spaced small holes arranged in groups (8) according to the desired pattern of said particles,
2) exuding a mixture (4) of a liquid binding agent and abrasive particles from inside said drum through said holes and depositing the mixture onto the passing web,
3) causing the binding agent to solidify and hold captive said particles onto the web, and
4) cutting the web lengthwise into bands (7) for forming said road contact portion (12).

## Patentansprüche

1. Vorrichtung zum Anbringen am Rad eines Kraftfahrzeugs, um die Reibung zwischen dem Rad und der Straßenoberfläche während winterlichen Verhältnissen zu erhöhen, umfassend einen Kontaktteil zur Straße (12), das im Wesentlichen aus einem textilen Material besteht und die Lauffläche des Rads umgeben soll und von flexiblen Innenseiten- und Außenseitenteilen (13, 15) in Position gehalten wird, und die mindestens auf der Innenseite des Rads von einem elastischen Element (16) gespannt wird, wobei die Außenseite des Kontaktteils zur Straße (12) mindestens teilweise mit einem Bindemittel ausgestattet ist, das Schleifpartikel aufweist, die daran haften, **dadurch gekennzeichnet, dass** der Kontaktteil zur Straße (12) aus einem separaten Band (7) geformt ist, wobei das Bindemittel und die Schleifpartikel weniger als 60%, vorzugsweise weniger als 50%, der Oberfläche des Bands (7) bedecken.

2. Vorrichtung nach Anspruch 1, wobei die Partikel mindestens einen Streifen (6) auf dem Band (7) bilden.

3. Vorrichtung nach Anspruch 2, wobei das Band (7) mindestens zwei Streifen (6) umfasst, die ein Muster bilden, das aus der Gruppe, umfassend längslaufend und parallel, querverlaufend und parallel, zickzack, kreuz und quer verlaufend, oder aus jeder daraus möglichen Kombination gewählt wird.

4. Vorrichtung nach Anspruch 2 oder 3, wobei die Partikel klar abgegrenzte Stellen (8) bilden, die den mindestens einen oder zwei Streifen (6) bilden.

5. Vorrichtung nach Anspruch 4, wobei die Stellen (8) wie geometrische Figuren geformt sind, die aus der Gruppe, umfassend Kreis, Quadrat, Rechteck, Dreieck, Rhombus, Fünfeck und Sechseck gewählt werden.

6. Vorrichtung nach Anspruch 5, wobei die Stellen (8) von Flächen (9) getrennt sind, die nicht von den Partikeln bedeckt sind.

7. Vorrichtung nach einem der vorhergehenden Ansprüche, wobei das Material der Partikel aus der Gruppe, umfassend Al2O3, SiO, Cro3,ZrO2, Quarz, Diamant und daraus möglichen Kombinationen gewählt wird.

8. Vorrichtung nach einem der vorhergehenden Ansprüche, wobei das Material mit einem Muster aus Metallknöpfen (9, 11) ausgestattet ist, wobei die Knöpfe vorzugsweise zwei Teile umfassen, einen an jeder Seite des textilen Materials, wobei sie durch ein Loch im textilen Material miteinander verbunden sind.

9. Verfahren zur Herstellung einer Vorrichtung nach einem der vorhergehenden Ansprüche, mit einem Kontaktteil zur Straße (12) und Innenseiten- und Außenseitenteilen (13, 15), umfassend folgende Schritte:
1) In-Kontakt-bringen einer Bahn eines textilen Substratmaterials (5) mit einer rotierenden Trommel (1), die synchron dazu ist, wobei die Trommel (1) mehrere eng nebeneinander angeordnete Löcher aufweist, die in Gruppen (8) entsprechend dem gewünschten Muster der Partikel angeordnet sind,
2) Absondern einer Mischung (4) aus einem flüssigen Bindemittel und Schleifpartikeln von der Innenseite der Trommel durch die Löcher und Ablagern der Mischung auf der vorbeilaufenden Bahn,
3) Zum-Aushärten-bringen des Bindemittels und einhergehendem Festhalten der Partikel auf der Bahn, und
4) längsweises Schneiden der Bahn in Bänder (7), um den Kontaktteil zur Straße (12) zu bilden.

## Revendications

1. Dispositif destiné à être monté sur une roue d'automobile afin d'accroître les frottements entre la roue et la surface de la route dans des conditions hivernales, comprenant une partie de contact avec la route (12) constituée sensiblement d'une matière textile et destinée à encercler la bande de roulement de la roue et à être maintenue en place au moyen de parties flexibles de côté intérieur et de côté extérieur (13, 15) qui, au moins sur le côté intérieur de la roue, est serrée au moyen d'un élément élastique (16), l'extérieur de la partie de contact avec la route (12) étant pourvue au moins partiellement d'un agent liant ayant des particules abrasives qui y adhèrent, **caractérisé en ce que** ladite partie de contact avec la route (12) est constituée d'une bande distincte (7), dans lequel ledit agent liant et lesdites particules abrasives couvrent moins de 60 % de la surface de la bande, de préférence moins de 50 % de ladite surface.

2. Dispositif selon la revendication 1, dans lequel lesdites particules forment au moins une rayure (6) sur ladite bande (7).

3. Dispositif selon la revendication 2, dans lequel ladite bande comprend au moins deux rayures (6) qui forment un motif choisi dans le groupe se composant de longitudinales et parallèles, transversales et parallèles, en zigzag, entrecroisées, ou n'importe quelle combinaison de cela.

4. Dispositif selon la revendication 2 ou 3, dans lequel les particules forment des plaques discrètes (8) constituant lesdites au moins une ou deux rayures (6).

5. Dispositif selon la revendication 4, dans lequel lesdites plaques (8) sont en forme de figures géométriques choisies dans le groupe se composant d'un cercle, un carré, un rectangle, un triangle, un losange, un pentagone et un hexagone.

6. Dispositif selon la revendication 5, dans lequel lesdites plaques (8) sont séparées par des zones (9) qui ne sont pas couvertes par lesdites particules.

7. Dispositif selon l'une quelconque des revendications précédentes, dans lequel la matière des particules est choisie dans le groupe se composant d'Al2O3, SiO, CrO3, ZrO2, quartz, diamant et des combinaisons de cela.

8. Dispositif selon l'une quelconque des revendications précédentes, dans lequel ladite matière est pourvue d'un motif de boutons métalliques (9, 11), ledit bouton comprenant de préférence deux parties, une de chaque côté de la matière textile, reliées à travers un trou dans la matière textile.

9. Procédé pour réaliser un dispositif selon l'une quelconque des revendications précédentes, ayant une partie de contact avec la route (12) et des parties de côté intérieur et de côté extérieur (13, 15), comprenant les étapes consistant à :
1) faire passer un tissu d'une matière textile substrat (5) en contact avec un tambour rotatif (1) en synchronisation avec celui-ci, ledit tambour (1) ayant une pluralité de petits trous étroitement espacés agencés en groupes (8) selon le motif souhaité desdites particules,
2) faire couler un mélange (4) d'un agent liant liquide et de particules abrasives depuis l'intérieur dudit tambour à travers lesdits trous et déposer le mélange sur le tissu passant,
3) amener l'agent liant à se solidifier et à maintenir lesdites particules prisonnières sur le tissu, et
4) découper le tissu longitudinalement en bandes (7) pour former ladite partie de contact avec la route (12).
